# EUROPEAN PATENT APPLICATION

(11) **EP 2 732 913 A1**
(43) Date of publication of application: **21.05.2014**
(21) Application number: 12814445.8
(22) Date of filing: 13.07.2012
(51) Int. Cl.: B23Q 11/00, B23B 27/00, B23C 9/00

(54) **ANTI-VIBRATION MEMBER AND CUTTING TOOL**

(30) Priority: 15.07.2011 JP 2011156602
(71) Applicant: Mitsubishi Heavy Industries, Ltd., Tokyo 108-8215 (JP)
(72) Inventor: MATANO, Kazuya, Tokyo 108-8215 (JP); KAWASHITA, Rimpei, Tokyo 108-8215 (JP)
(74) Representative: HOFFMANN EITLE
(86) International application number: PCT/JP2012/067934
(87) International publication number: WO 2013/011944

(57) **Abstract**

An anti-vibration member is provided which includes a member main body having rubber elasticity or viscoelasticity and can be mounted on an outer surface of a tool main body by a frictional force against the outer surface.

## Description

### Technical Field

The present invention relates to an anti-vibration member that dampens vibration when mounted on a tool and a cutting tool provided with the anti-vibration member.

Priority is claimed on Japanese Patent Application No. 2011-156602, filed July 15, 2011, the content of which is incorporated herein by reference.

### Background Art

As a cause of degrading the working accuracy of a workpiece at the time of cutting work, there is vibration of a cutting tool during working. In a case of setting a tool length to be long in order to avoid interference of a cutting tool with a workpiece at the time of, for example, milling, it is known that the strength of the cutting tool decreases due to an increase in the protrusion amount of the tool and the occurrence of vibration increases. Due to such circumstances, various attempts have been made in order to suppress vibration of the cutting tool.

For example, in PTL 1, an anti-vibration tool is described in which vibration at the time of working is suppressed by providing a weight supported by a viscoelastic body in an internal hollow portion of the tool.

### Citation List

### Patent Literature

[PTL 1] Japanese Unexamined Patent Application, First Publication No. 2008-307642

### Summary of Invention

### Problem to be Solved by the Invention

Incidentally, in the anti-vibration tool of the related art described above, there is a problem in that a structure is complicated as it is necessary to form the hollow portion in a tool main body and then fix the weight to the inside thereof through the viscoelastic body, and thus a steep rise in the manufacturing cost of the tool is caused. Further, since a dynamic vibration absorber such as a weight is disposed in the inside of the tool main body, there is a problem in that it is not possible to cope with cooling by internal oil supply which is regarded as being effective for cooling at the time of the cutting work.

In addition, because of the structure as described above, there is a problem in that the strength of the tool itself decreases, whereby an adverse influence is exerted on the life of the tool.

The present invention has been made in consideration of such circumstances and an object thereof is to provide an anti-vibration member in which it is possible to add a dampening function to a cutting tool with a simple structure without sacrificing the strength of the tool, and a cutting tool provided with the anti-vibration member.

### Means for Solving the Problem

According to an aspect of the invention, there is provided an anti-vibration member which includes a member main body having rubber elasticity or viscoelasticity and can be mounted on an outer surface of a tool main body by a frictional force against the outer surface.

According to the anti-vibration member related to this aspect of the invention, at the time of cutting, the member main body having rubber elasticity or viscoelasticity is deformed due to the deflection and the torsion of the tool, which occur in the tool, and thus vibration of the tool main body can be dampened by a dampening effect of the member main body itself. Further, friction is generated in the contact surface between the tool main body and the member main body and frictional resistance is generated in the boundary surface between the tool main body and the member main body, whereby vibration can be dampened.

The anti-vibration member may be configured to have a tubular shape having a central axis hole such that the tool main body can be inserted into the central axis hole. That is, the member main body may have a tubular shape having a central axis hole and the tool main body may be inserted into the central axis hole.

According to the anti-vibration member related to this aspect of the invention, the anti-vibration member can be fabricated with a simpler structure. Further, it is possible to provide an anti-vibration member which is more easily mounted on the tool main body. In addition, since the anti-vibration member can also be easily mounted on an existing tool, it is possible to use the existing tool with lower vibration without discarding it.

Further, the inner diameter of the central axis hole may be made smaller than the outer shape of the tool main body.

According to the anti-vibration member related to this aspect of the invention, since a tightening margin is generated between the central axis hole of the anti-vibration member and the tool main body, the anti-vibration member and the tool main body can be fitted to each other with a predetermined fastening force by interference fit.

Further, in the anti-vibration member, at least one slit may be formed on at least one side of the inner periphery side and the outer periphery side of the member main body.

According to the anti-vibration member related to this aspect of the invention, an area of friction in the inside of the anti-vibration member increases due to the slit, and thus a higher friction dampening effect can be obtained.

Further, fibers may be added to the member main body having rubber elasticity or viscoelasticity.

According to the anti-vibration member related to this aspect of the invention, it is possible to suppress deformation of the anti-vibration member by a centrifugal force in a case where a cutting tool rotates at a high speed.

In addition, according to another aspect of the invention, there is provided a cutting tool which includes the anti-vibration member and a tool main body.

According to the anti-vibration member related to the aspect of the invention, it is possible to add a dampening function to the cutting tool without sacrificing the strength of the cutting tool.

### Effects of the Invention

According to the invention, at the time of cutting, the member main body having rubber elasticity or viscoelasticity is deformed due to the deflection and the torsion of the tool, which occur in the tool, and thus vibration of the tool main body can be dampened by a dampening effect of the member main body itself. Further, friction is generated in the contact surface between the tool main body and the member main body and frictional resistance is generated in the boundary surface between the tool main body and the member main body, whereby vibration can be damped.

### Brief Description of Drawings

FIG. 1 is an overview diagram of a tool mounting section of a machine tool according to an embodiment of the invention.
FIG. 2 is a perspective view of an anti-vibration member according to a first embodiment.
FIG. 3 is an enlarged side view of a chuck section of the machine tool.
FIG. 4 is a perspective view of an anti-vibration member according to a second embodiment.
FIG. 5A is a perspective view of an anti-vibration member according to another form of the second embodiment.
FIG. 5B is a perspective view of an anti-vibration member according to another form of the second embodiment.
FIG. 5C is a perspective view of an anti-vibration member according to another form of the second embodiment.
FIG. 6 is a tapping test result of Comparative Example 1 (with no anti-vibration member).
FIG. 7 is a tapping test result of Example 2-1 (having an anti-vibration member over the full length).
FIG. 8 is a tapping test result of Example 2-2 (having an anti-vibration member over half of the full length).
FIG. 9 is a graph showing a frequency response in a tapping test.
FIG. 10 is a surface roughness measurement result of Comparative Example 3.
FIG. 11 is a surface roughness measurement result of Example 3.

### Description of Embodiments

Hereinafter, a first embodiment of the invention will be described in detail with reference to the drawings.

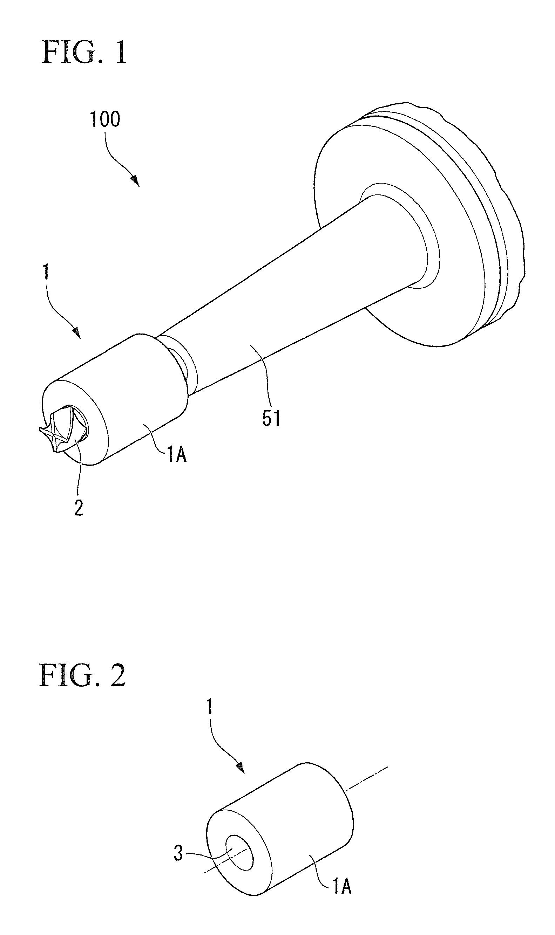

FIG. 1 is an overview diagram of a tool mounting section of a horizontal machining center 100 (hereinafter referred to as a machine tool) which is provided with a cutting tool with an anti-vibration member according to this embodiment applied thereto.

An anti-vibration member 1 according to this embodiment is applied to a milling cutter (a cutter) of the machine tool 100. In this embodiment, an end mill 2 is used as the milling cutter. As shown in FIG. 1, a main shaft of the machine tool 100 which is used in this embodiment is directed in the horizontal direction, and the end mill 2 is held by a chuck section 51.

As shown in FIG. 2, a member main body 1A of the anti-vibration member 1 has a cylindrical shape and a central axis hole 3 is formed along an axial direction. The member main body 1A is made of a viscoelastic body and more specifically, is formed of rubber having natural rubber compounding hardness of 65. In addition, as a material of the anti-vibration member 1, it is not limited to rubber and any member is acceptable as long as it has rubber elasticity or viscoelasticity. A high vibration dampening effect is obtained by using such material. For example, as the material having rubber elasticity, a network polymer such as natural rubber or synthetic rubber or chained synthetic polymer such as plastic can be adopted. Further, for example, as the material having viscoelasticity, a gel-like material containing silicone having impact absorption power or pressure dispersion performance as its main raw material (for example, αGEL (registered trademark) of Taica Corporation, or the like) can be adopted.

The axial length of the anti-vibration member 1 is a length that almost covers a shank portion of the end mill 2. That is, the anti-vibration member 1 has a shape that covers the end mill 2 over substantially the full length except for a cutting portion and a holding portion of the end mill 2. The anti-vibration member 1 according to this embodiment has a length of 50 mm and an outer diameter of 40 mm; and the diameter of the central axis hole is 13 mm.

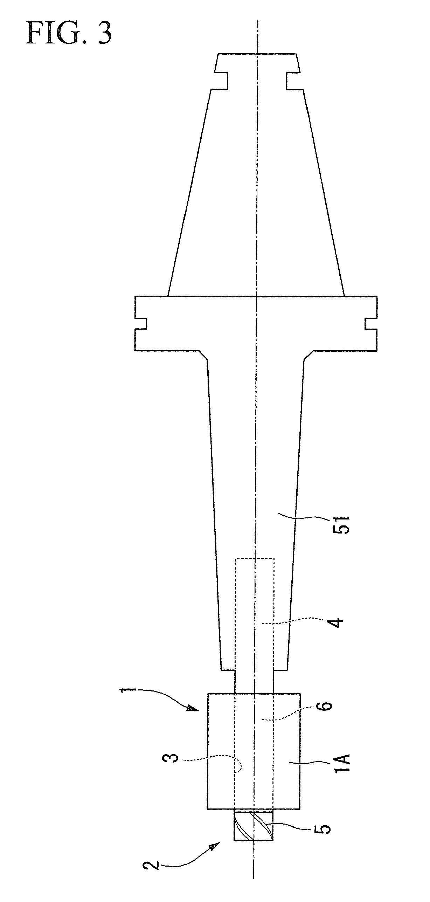

FIG. 3 is an enlarged side view of the chuck section 51.

As shown in FIG. 3, the anti-vibration member 1 is mounted on the end mill 2 held by the chuck section 51. The end mill 2 is configured to have a holding portion 4 which is held by the chuck section 51, a cutting portion 5, and a shank portion 6 between the holding portion and the cutting portion. The end mill 2 has a substantially columnar shape and the shank portion 6 also has a columnar shape having a constant diameter. The anti-vibration member 1 is mounted on the shank portion 6 of the end mill 2.

In this embodiment, the protrusion amount of the end mill 2 from the chuck section 51 is 79 mm, and the anti-vibration member 1 is mounted at a position of 14.5 mm from a leading end of the end mill 2. Further, the diameter of the shank portion of the end mill is 14 mm, and the inner diameter of the central axis hole of the anti-vibration member 1 is made to be 1 mm smaller than the outer diameter of the shank portion of the end mill. That is, the anti-vibration member 1 and the end mill 2 are fitted to each other in an interference-fit relationship.

According to the above embodiment, at the time of cutting, the anti-vibration member I is deformed due to the deflection and the torsion of the end mill 2, which occur in the end mill 2, and thus the vibration of a main body of the end mill 2 can be dampened by a dampening effect of the anti-vibration member 1 itself.

Further, friction is generated in the contact surface between the end mill 2 and the anti-vibration member 1 and frictional resistance is generated in the boundary surface between the end mill 2 and the anti-vibration member 1, whereby vibration can be damped.

Further, since the anti-vibration member 1 has a simple shape, the anti-vibration member 1 can be fabricated at lower cost. Further, it is possible to provide the anti-vibration member 1 which is more easily mounted on the end mill 2. In addition, since the anti-vibration member can also be easily mounted on an existing tool, it is possible to use the existing tool with lower vibration without discarding it.

In addition, since a tightening margin is generated between the central axis hole 3 of the anti-vibration member 1 and the end mill 2, the anti-vibration member 1 and the end mill 2 can be fitted to each other with a predetermined fastening force by interference fit.

Next, an anti-vibration member according to a second embodiment will be described.

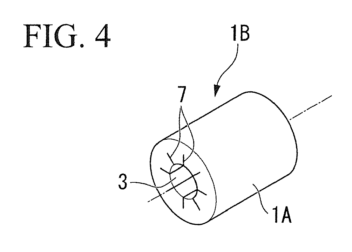

FIG. 4 is a perspective view of an anti-vibration member 1B according to the second embodiment. As shown in FIG. 4, in the member main body 1A of the anti-vibration member 1B according to the second embodiment, a plurality of slits 7 formed radially (in a radial direction) from the central axis hole 3 when viewed from the axial direction is formed on the inner periphery side of the anti-vibration member 1 according to the first embodiment. The plurality of slits 7 extends axially (in the axial direction) over the full length of the anti-vibration member 1B.

According to the above embodiment, an area of friction in the inside of the anti-vibration member 1B increases due to the slits 7, and thus a higher friction dampening effect can be obtained. Further, since the central axis hole 3 is easily expanded, it becomes easy to mount the anti-vibration member 1B on the end mill 2.

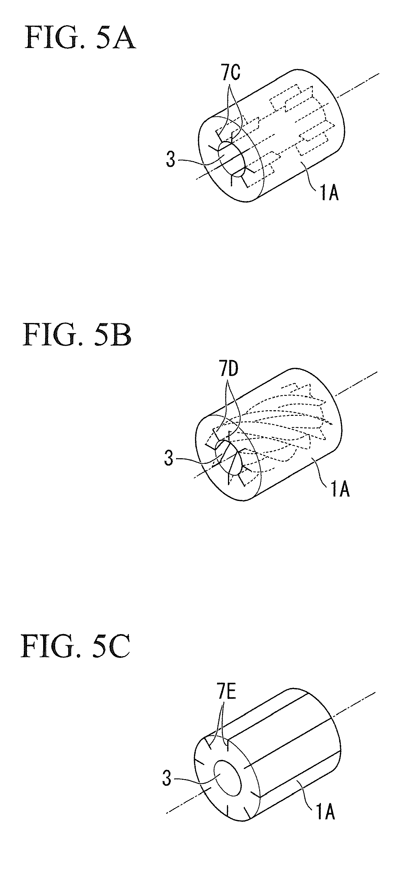

In addition, the slit 7 need not be formed continuously in the axial direction. For example, as shown in FIG. 5A, a slit 7C may be intermittently formed at a portion of the member main body 1A. Further, the slit 7 need not be provided linearly in the axial direction, and as shown in FIG. 5B, a slit 7D may be formed to be twisted in a screw shape.

Further, as shown in FIG. 5C, a slit 7E may be formed on the outer periphery side of the member main body 1A. Due to the slits being formed on not only the inner periphery side, but also on the outer periphery side, the rigidity of the anti-vibration member decreases, and thus it is possible to expect a dampening effect by structural dampening.

### Examples

Next, various measurements for confirming an anti-vibration effect and the like were performed on an example of an end mill with the anti-vibration member mounted thereon and a comparative example of an end mill without the anti-vibration member.

Verification was performed from four viewpoints: a comparison by a chipping amount, a comparison by a tapping test, a comparison by surface roughness, and a comparison by inspection of tool damage.

As a machine tool, a horizontal machining center was used. As for the end mill, six-blade end mills of ϕ14 were used. Test pieces were set to be aging-treated square timbers (width×height×depth=122×109×76 (mm)). Cuts in the radial direction and the axial direction and the number of rotations were set to be constant in the example and the comparative example.

### <Comparison by Chipping Amount>

The test pieces were worked by the end mill of the example and the end mill of the comparative example and the chipping amounts (abrasion losses) after the working were measured and compared with each other. The working of the test piece was performed by two-surface working.

### <Example 1>

In Example 1, the test piece was worked on the conditions shown in Table 1 by using an end mill with the anti-vibration member mounted thereon. As for the anti-vibration member, an anti-vibration member having an outer diameter of 40 mm, an inner diameter of 13 mm, and a length of 50 mm was used, and the anti-vibration member was fitted and fixed to an end mill having an outer diameter of 14 mm by interference fit.

### <Comparative Example 1>

In Comparative Example 1, the test piece was worked on the conditions shown in Table I by using an end mill without the anti-vibration member mounted thereon.

The chipping amounts of the end mills after end faces of the test pieces were subjected to the two-surface working are shown in Table 1. The chipping amount was measured with respect to each of a flank face and a rake face of the end mill. Further, a cutting distance of one surface was set to be about 2.68 m.

From Table 1, although variation in chipping amount exists in each cutting edge, at the point in time of the two-surface working, a reduction in chipping amount of 49% on average could be confirmed in the evaluation of the flank face. In the evaluation of the rake face, a reduction in chipping amount of 31% on average could be confirmed.

**[Table 1]**

| Cutting edge | Flank face (mm) | | Rake face (mm) | |
|---|---|---|---|---|
| | Comparative Example 1 | Example 1 | Comparative Example 1 | Example 1 |
| 1-st edge | 0.043 | 0.047 | 0.000 | 0.010 |
| 2-nd edge | 0.064 | 0.000 | 0.044 | 0.000 |
| 3-rd edge | 0.072 | 0.000 | 0.011 | 0.066 |
| 4-th edge | 0.168 | 0.084 | 0.066 | 0.055 |
| 5-th edge | 0.141 | 0.128 | 0.055 | 0.000 |
| 6-th edge | 0.101 | 0.044 | 0.055 | 0.028 |
| Average | 0.098 | 0.051 | 0.039 | 0.027 |
| Reduction effect | -49% | | -39% | |

### <Comparison by Tapping Test>

In order to confirm an effect factor of the anti-vibration member, a tapping test was carried out in a state where the rotation of a tool was stopped. The tapping test was carried out by setting a tool leading end position to be an excitation input position and striking the position with an impact hammer. A vibration measurement position was set to be the tool leading end position.

### <Examples 2-1 and 2-2>

As Example 2-1, an anti-vibration member covering a shank portion of an end mill over the full length was prepared. As Example 2-2, an anti-vibration member covering about half of a shank portion of an end mill, that is, an anti-vibration member having the full length of about half as compared to Example 2-1 was prepared.

### <Comparative Example 2>

In Comparative Example 2, an end mill without the anti-vibration member mounted thereon was used.

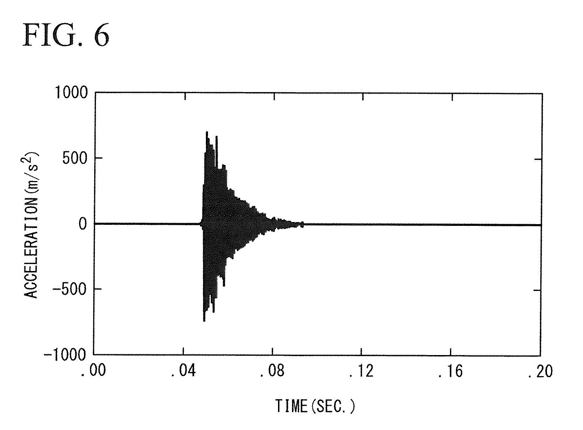

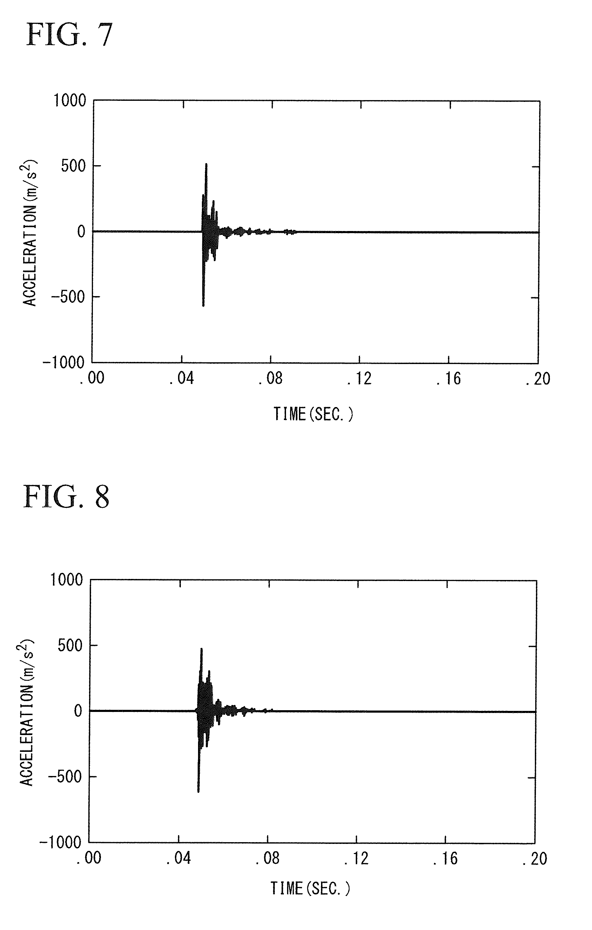

FIG. 6 is a tapping test result of Comparative Example 1 (without the anti-vibration member). FIG. 7 is a tapping test result of Example 2-1 (having the anti-vibration member over the full length). FIG. 8 is a tapping test result of Example 2-2 (having the anti-vibration member over half of the full length). All the graphs show vibration acceleration in the horizontal direction.

As shown in FIGS. 6 to 8, it is found that dampening effects of Example 2-1 and Example 2-2 are high, compared to that of Comparative Example 1.

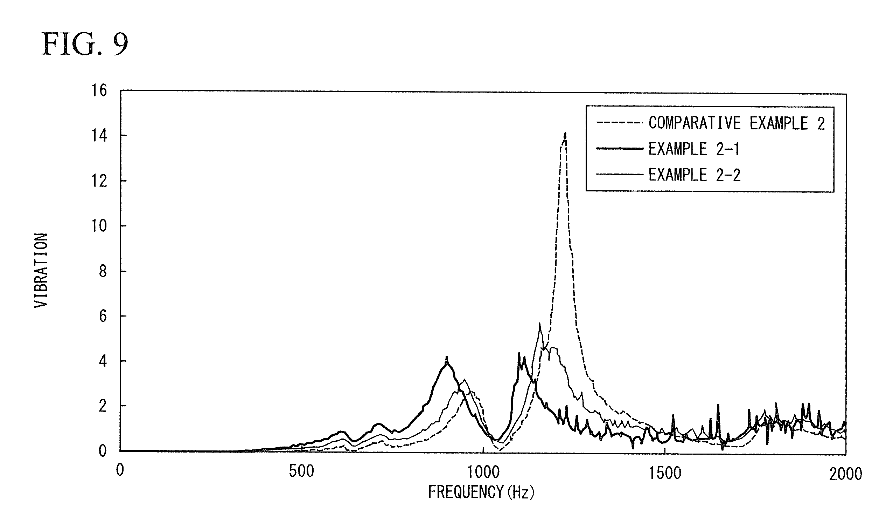

FIG. 9 is a graph showing a frequency response. Dampening ratios calculated by a half power method were about 1.5% in Comparative Example 2, 5.0% in Example 2-1, and 3.0% in Example 2-2, and it could be confirmed that there was a dampening effect due to mounting of the anti-vibration member. As shown in FIG. 9, peaks of vibration of tools in Comparative Example 2, Example 2-1, and Example 2-2 are in the vicinity of 900 Hz and the vicinity of 1200 Hz, and an excitation frequency which is calculated from the number of rotations and the number of cutting edges of a tool is sufficiently away from the peaks described above. For this reason, the effect due to mounting of the anti-vibration member is considered to be attributable to dampening, rather than resonance avoidance. Further, although an anti-vibration effect is slightly less because only about half of the shank portion of the end mill is covered, it was shown that Example 2-2 also had an anti-vibration effect.

### <Comparison by Surface Roughness>

The test pieces were worked by the end mill of the example and the end mill of the comparative example and the surface roughness after the working were measured and compared with each other. The working of the test piece was performed by five-surface working.

### <Example 3>

The same conditions as those in Example 1 were used. That is, the test piece was worked using an end mill with the anti-vibration member mounted thereon.

### <Comparative Example 3>

The same conditions as those in Comparative Example 1 were used. That is, the test piece was worked using an end mill without the anti-vibration member mounted thereon.

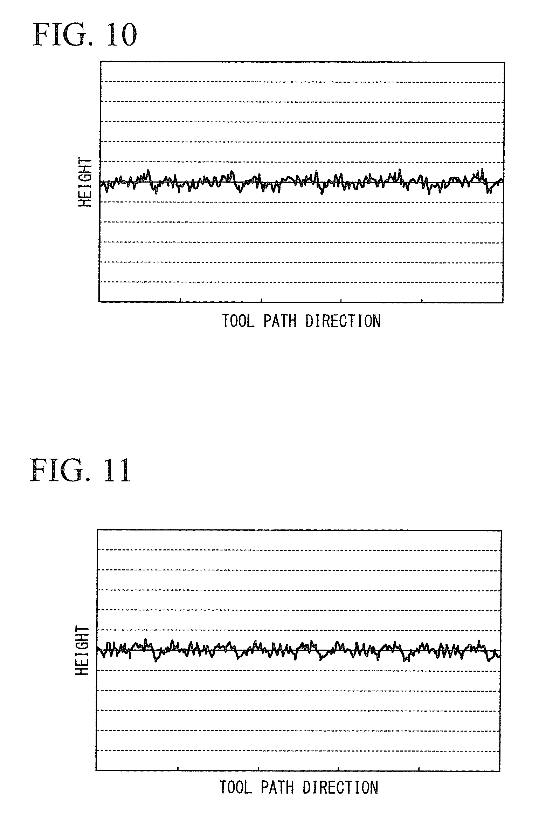

The values of surface roughness in a tool path (tool pathway) direction are shown in Table 2. Further, a surface roughness measurement result of Comparative Example 3 is shown in FIG. 10 and a surface roughness measurement result of Example 3 is shown in FIG. 11. Both FIGS. 10 and 11 show the surface roughness in the tool path direction. Further, the scale in the height direction is set to be the same.

**[Table 2]**

| | Surface roughness (µm) | |
|---|---|---|
| | Comparative Example 3 | Example 3 |
| Ra: arithmetic mean roughness | 0.65 | 0.61 |
| Rz: maximum height roughness | 4.3 | 3.7 |
| Rt: maximum cross-section height | 4.7 | 4.1 |

As shown in Table 2, with respect to the surface roughness in the tool path direction, all the numerical values of the arithmetic mean roughness Ra, the maximum height roughness Rz, and the maximum cross-section height Rt were low numerical values in Example 3. In particular, due to mounting of the anti-vibration member in Example 3, the maximum height roughness Rz is reduced from 4.3 µm to 3.7 µm. As the cause of this, a reduction in the amplitude of tool vibration is considered.

Further, as shown in FIGS. 10 and 11, looking at a measured shape of a worked surface, in Example 3, the worked surface has a shape in which the waveforms of a short period are continuous, and the heights of the waveforms increase and decrease in a regular manner when viewed in a period longer than the individual waveforms. That is, it is found that the waveform becomes slightly smooth due to suppression of vibration. In contrast, in Comparative Example 3, the waveforms of the worked surface are irregular, it is not possible to see a trend as in Example 3, and it is difficult to perceive regularity in which the outer shapes of the waveforms increase and decrease in a long period. That is, it is found that suppression of vibration is small compared to Example 3, whereby the fine waveforms are arranged irregularly.

### <Comparison by Inspection of Tool Damage>

A fluorescent penetration flaw detection test and a radiation test were carried out on a cutting tool with the anti-vibration member of Example 1 mounted thereon and a damage state of the tool itself was checked.

As a result, there was no abnormality in both the states of before cutting work and after cutting work (cutting distance: 13.4 m) and damage to the tool was not confirmed at a tool shank portion even in the initial stage of cutting.

By the above comparisons, the following results were obtained.
(1) It could be confirmed that by mounting the anti-vibration member on the end mill, a dampening effect of a tool was increased and there was the effect of reducing chipping of the cutting edge.
(2) It was found that the effect of reducing the chipping of the cutting edge was effective in the early stage of cutting and that the chipping reduction effect by mounting of the anti-vibration member was larger than oscillation at the time of preset of a tool.

In addition, the technical scope of the invention is not limited to the embodiments described above and it is possible to make various changes in a scope which does not depart from the gist of the invention. For example, in each embodiment described above, a horizontal machining center is used as the machine tool. However, the machine tool is not limited thereto, as long as it is a machine tool using a cutter having a long shape. For example, a configuration is also acceptable in which the anti-vibration member is used for a drill of a drilling machine or a bite of a lathe.

### Reference Signs List

1: anti-vibration member
1A: member main body
2: end mill (tool main body)
3: central axis hole
4: holding portion
5: cutting portion
6: shank portion
7, 7C, 7D, 7E: slit

## Claims

1. An anti-vibration member comprising a member main body having rubber elasticity or viscoelasticity, wherein the anti-vibration member is capable of being mounted on an outer surface of a tool main body by a frictional force against the outer surface.

2. The anti-vibration member according to Claim 1, wherein the member main body has a tubular shape having a central axis hole and the tool main body is inserted into the central axis hole.

3. The anti-vibration member according to Claim 2, wherein an inner diameter of the central axis hole is made smaller than an outer diameter of the tool main body.

4. The anti-vibration member according to Claim 3, wherein at least one slit is formed on at least one side of the inner periphery side and the outer periphery side of the member main body.

5. The anti-vibration member according to any one of Claims 1 to 4, wherein fibers are added to the member main body.

6. A cutting tool comprising:
the anti-vibration member according to any one of Claims 1 to 4; and
a tool main body.

7. A cutting tool comprising:
the anti-vibration member according to Claim 5; and
a tool main body.
